(19) Europäisches Patentamt

European Patent Office

Office européen des brevets

(11) **EP 0 831 109 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(51) Int Cl.[7]: **C08G 63/82**, B01J 29/00

(21) Anmeldenummer: **97111235.4**

(22) Anmeldetag: **04.07.1997**

(54) **Verfahren zur Polykondensation von Polyester**

Method for the polycondensation of polyesters

Procédé pour polycondensation de polyester

(84) Benannte Vertragsstaaten:
**DE ES FR GB IE IT NL**

(30) Priorität: **20.09.1996 DE 19638549**

(43) Veröffentlichungstag der Anmeldung:
**25.03.1998 Patentblatt 1998/13**

(73) Patentinhaber: **Zimmer Aktiengesellschaft**
**60388 Frankfurt am Main (DE)**

(72) Erfinder: **Thiele, Ulrich, Dr.**
**63486 Bruchköbel (DE)**

(56) Entgegenhaltungen:
**EP-A- 0 699 700**      **US-A- 5 041 525**

- **"AMORPHOUS SODIUM ALUMINOSILICATES AS CATALYST FOR MANUFACTURING PET" RESEARCH DISCLOSURE, Nr. 360, 1.April 1994, Seite 210 XP000446572**
- **CHEMICAL ABSTRACTS, vol. 90, no. 10, 5.März 1979 Columbus, Ohio, US; abstract no. 72649, XP002051081 & RO 61 870 A (INTREPRINDEREA DE FIBRE SINTETICE) 29.Dezember 1976**
- **CHEMICAL ABSTRACTS, vol. 90, no. 18, 30.April 1979 Columbus, Ohio, US; abstract no. 138467, XP002051082 & N. BILBA ET AL.: MATER. PLAST., Bd. 15, Nr. 3, 1978, BUCHAREST, Seiten 140-142,**
- **B. ELVERS ET AL. (ED.): "Ullmann's Encyclopedia of Industrial Chemistry, 5. Ed., Vol A28" 1996 , VCH VERLAGSGESELLSCHAFT , WEINHEIM XP002051080 * Seite 475 - Seite 504 ***

## Beschreibung

Die vorliegende Erfindung betrifft einen Zeolith-Katalysator zur Polykondensation von Polyester, insbesondere von Polyethylenterephthalat und dessen Copolymeren. Des weiteren betrifft die Erfindung ein Verfahren zur Herstellung von Polyester unter Verwendung dieses Zeolith-Katalysators.

Die Herstellung von Polyestern erfolgt im allgemeinen so, daß ein Diol mit einer Dicarbonsäure oder einem niederen Dicarbonsäureester, z. B. Dimethylester, umgesetzt wird. Es entsteht zunächst der entsprechende Dicarbonsäurediester, der bei ansteigenden Temperaturen unter vermindertem Druck ein- oder mehrstufig polykondensiert wird. Umesterung und Polykondensation benötigen Katalysatoren, während die Veresterung durch solche zumindest beschleunigt wird. Als geeignete Katalysatoren für die Veresterung werden hauptsächlich Verbindungen des Sb, Ti, Ge und Sn, für die Umesterung Verbindungen des Mn, Co und Zn und für die Polykondensation Verbindungen des Sb, Ti, Pb, Ge, Zn und Sn, genannt, wobei die Katalysatormetallmengen meist zwischen 20 und 500 ppm, bezogen auf Polyester, liegen.

Aus US-A-5 041 525 ist bekannt, die Polykondensation in Abwesenheit eines Antimon-Katalysators, und stattdessen in Gegenwart von 900 - 2700 ppm eines auf eine Partikelgröße von 0,5 - 2,0 μ aufgemahlenen, kristallinen Natrium-aluminiumsilikat-Zeoliths mit einer effektiven Porengröße von maximal 10 Å als Katalysator auszuführen. Als geeignet werden Handelsprodukte von UCC und Linde mit einem Wassergehalt von weniger als 1,5 bis 2,5 % bezeichnet. Nachteilig ist die relativ hohe Einsatzmenge, die die Oberflächeneigenschaften und die Klarsichtigkeit des Polyesters beeinflussen.

US-A-4 282 137 beschreibt die Verbesserung der Anfärbbarkeit von Polyester durch Zusatz, beispielsweise vor der Vorkondensation, von 0,1 - 4,0 Gew.-%, auf weniger als 4 μ Partikelgröße gemahlenem und mehrere Stunden bei 290 °C unter Vakuum getrocknetem Zeolith mit einem Porendurchmesser von etwa 5 - 6 Å. Eine eventuelle katalytische Wirkung des Zeoliths wird nicht erwähnt.

Gemäß US-A-3 876 608 werden die Aufwickel-Eigenschaften von Polyester-Filmen durch Zusatz vor der Vorkondensation von 5 - 300 ppm eines handelsüblichen Zeoliths mit einer Partikelgröße von 2 - 10 μ verbessert. Eine eventuelle katalytische Wirkung wird nicht erwähnt.

Gemäß der internationalen Anmeldung WO 93/21264 läßt sich die thermische Stabilität von Copolyestern durch Zusatz, beispielsweise vor der Polykondensation, von 50 ppm bis 10 Gew.-% eines gegebenenfalls mit anderen Metallatomen substituierten Zeoliths 4A mit einer Partikelgröße von 0,1 - 50 μ verbessern. Auch hier wird keine katalytische Wirkung erwähnt.

In weiteren Patenten (US-A-5 187 216 und WO 94-29378) werden Zusätze vor der Polykondensation von 100 - 1000 ppm Zeolith, zusätzlich zu einem üblichen Polykondensationskatalysator, zwecks schnellerer Kristallisation des Polyesters und geringerem Acetaldehyd-Gehalt beschrieben.

Aufgabe der vorliegenden Erfindung ist es, einen Zeolith-Katalysator zur Polykondensation von Polyester aufzufinden, der eine höhere katalytische Aktivität aufweist als die vorstehend beschriebenen Zeolithe und ein Verfahren zur Herstellung von Polyester, insbesondere von Polyester von hoher Brillanz und Klarheit sowie niedriger Carboxyl-Endgruppen-Konzentration aufzuzeigen, welches diesen Katalysator verwendet.

Die Lösung dieser Aufgabe erfolgt erfindungsgemäß durch ein Verfahren gemäß den Angaben der Patentansprüche. Dieses Verfahren ist dadurch gekennzeichnet, daß der Polykondensations-Katalysator ein Alkali- oder Erdalkalimetall-aluminiumsilikat-Zeolith mit einer Löslichkeit bei 260 °C in im wesentlichen aus Bis(hydroxyethylen) terephthalat bestehendem Veresterungsgemisch, welches durch Veresterung von Terephthalsäure mit Ethylenglykol bis zu einem Umsetzungsgrad von über 85 % erhalten wurde, von über 8,0 Gew.-%, einem originären Wassergehalt von 12 bis 30 Gew.-%, jeweils bezogen auf Trockensubstanz, und einer mittleren Partikelgröße von weniger als 1,0 μm ist, und in einer Menge von 10 bis 800 ppm, bezogen auf Trockensubstanz sowie auf Polyester, zu einem beliebigen Zeitpunkt vor Beginn der Polykondensation zugesetzt wird.

Zeolithe sind im Handel in zwei verschiedenen Qualitäten, zum einen mit einem Wassergehalt von weniger als etwa 3 Gew.-% als Katalysatoren und Adsorbentien, zum anderen mit einem originären Wassergehalt von 12 bis 30 Gew.-% als Zusatz zu Waschmitteln oder Detergentien erhältlich.

Die Zeolithe mit Katalysator-Qualität zeigen bei der Polykondensation von Polyestern nur eine geringe Aktivität, die den Einsatz von mindestens 1000 ppm erforderlich macht. Eine wesentlich höhere katalytische Aktivität wiesen hingegen, völlig überraschend, die Zeolithe auf, die üblicherweise als Calcium-Absorber oder sogenannte Builder in modernen Waschmitteln Verwendung finden. Auch bei ansonsten gleicher stöchiometrischer Zusammensetzung waren die Zeolithe mit einem originären Wassergehalt von 12 bis 30 Gew.-%, vorzugsweise 18 bis 25 Gew.-%, gegenüber getrockneten Zeolithen deutlich überlegen. Wichtig ist allerdings, daß der Wassergehalt von der Zeolith-Herstellung stammt, d. h. originär ist, wobei die Zeolithe nur teilentwässert und nicht getrocknet werden dürfen. Ein nachträgliches Anfeuchten getrockneter Zeolithe bringt keinen Aktivitätsgewinn gegenüber den getrockneten Zeolithen.

Des weiteren wurde gefunden, daß die Zeolithe, die in heißem Veresterungsgemisch am besten löslich sind, auch die beste katalytische Aktivität aufweisen. Eine weitere Steigerung der Aktivität wird durch Zermahlen der Zeolith-Kristalle auf eine mittlere Partikelgröße von weniger als 1,0 µ, vorzugsweise weniger als 0,50 µ und besonders bevorzugt weniger als 0,35 µ erreicht. Die Bestimmung der Partikelgröße erfolgte hierbei in Isopropanol mittels Ultrazentrifuge (Particle Size Distribution Analyzer, Typ CAPA-700, Horiba).

Das Vermahlen der Zeolithe kann in trockener Form vorgenommen werden, erfolgt aber bevorzugt in 30 bis 80 Gew.-%iger, besonders bevorzugt in 30 bis 50 Gew.-%iger Suspension in dem dem Polyester zugrundeliegenden Diol, beispielsweise in Ethylenglykol. Die Suspension bietet den Vorteil der Pumpfähigkeit und damit verbunden der leichten Dosierbarkeit, der Prozeßvereinfachung und der besseren Verteilung des Zeolith-Katalysators im Reaktionsgemisch. Durch Erhitzen der Suspension mehrere Stunden auf Siedetemperatur kann, wie weiter unten geschildert, die katalytische Aktivität zusätzlich verbessert werden.

Zur Bestimmung der Löslichkeit des Zeolith-Katalysators wird zunächst Terephthalsäure mit Ethylenglykol bis zu einem Umsetzungsgrad von über 85 % verestert. Das im wesentlichen aus Bis(hydroxyethylen)terephthalat bestehende Veresterungsgemisch wird mit 1,00 Gew.-% des zu untersuchenden Zeolith-Katalysators versetzt und 1 Stunde bei 260 °C unter Rückfluß erhitzt. Danach wird dieses Gemisch abgekühlt und zu Pulver vermahlen, und das Pulver unter Erhitzen auf 60 °C in einem gängigen Polyethylenterephthalat-Lösungsmittel gelöst, beispielsweise 10 g des Zeolith-haltigen Pulvers in 40 ml Phenol/Dichlorbenzol-Gemisch (3 : 2 Gew.-Teile). Der ungelöste Katalysator wird durch Zentrifugieren der Lösung bei mindestens 10000 U/min abgetrennt, und die verbleibende, optisch klare Lösung mittels Atomabsorptionsspektrometrie oder einer anderen adäquaten Methode auf Alkali- oder Erdalkalimetall, Aluminium und Silizium untersucht. Eine Blindprobe berücksichtigt die Löslichkeit des Katalysators im Polyethylenterephthalat-Lösungsmittel und gegebenenfalls die Silizium-Kontamination durch die verwendeten Glasgefäße.

Es zeigte sich, daß die erfindungsgemäßen Polykondensations-Katalysatoren eine mit herkömmlichen Antimon-Katalysatoren vergleichbar gute, katalytische Aktivität aufweisen, wenn sie neben dem angegebenen Wassergehalt und der Partikelgröße, eine wie vorstehend beschrieben bestimmte Löslichkeit von über 8,0 Gew.-%, vorzugsweise von mindestens 10,0 Gew.-%, bezogen auf Trockenmasse, aufweisen.

Des weiteren wurde gefunden, daß nicht nur die Löslichkeit des gesamten Zeolith-Katalysators, sondern auch die Löslichkeit der einzelnen, den Zeolith bildenden Elemente dessen katalytische Wirkung beeinflußen. Die katalytische Aktivität erwies sich um so höher, je höher das atomare Verhältnis des in Lösung gegangenen Aluminiums zu dem in Lösung gegangenen Silizium ist.

Um dies zu demonstrieren, wurde eine 30 bis 50 Gew.-%ige Suspension erfindungsgemäßer Zeolith-Katalysatoren in Ethylenglykol, wie sie bei der Polyester-Herstellung zum Einsatz kommt, 2 h unter Rühren am Rückfluß gekocht. Nach dem Erkalten wurde ein Teil dieser Suspension mit 9000 U/min zentrifugiert und in der so abgetrennten Flüssigkeit mittels AAS Aluminium, Silizium und Alkali- bzw. Erdalkalimetall bestimmt. Danach wurde unter gleichen Bedingungen ohne Katalysator hergestelltes Terephthalsäure-Ethylenglykol-Veresterungsprodukt mit einer Intrinsic-Viskosität von 0,20 dl/g unter Zusatz von je 250 ppm Zeolith-Polykondensationskatalysator, bezogen auf Trockensubstanz, polykondensiert, wobei als Polykondensationskatalysator entweder gemahlener, nicht suspendierter Zeolith (A) oder der nicht zentrifugierte Teil der gekochten Suspension nach Verdünnen mit Ethylenglykol auf 1,36 Gew.-% Zeolith-Trockensubstanz (B) oder die abgetrennte Flüssigkeit (C) oder der abzentrifugierte, ungelöste Zeolith-Rückstand (D) eingesetzt wurden.

Es stellte sich heraus, daß der ungelöste Zeolith-Rückstand (D) die geringste und die davon abgetrennte Flüssigkeit (C) die höchste katalytische Aktivität besitzen, während die gekochte Suspension (B) eine höhere Aktivität als der lediglich gemahlene Zeolith (A) aufweist. Die Ergebnisse dieses Tests sind in Tabelle 1 zusammengestellt.

Tabelle 1

| Katalysator Wessalith P* | Polyester | | | |
|---|---|---|---|---|
| | I.V. [dl/g] | COOH [meq/kg] | DEG [Gew.-%] | Farbe |
| A | 0,598 | 10 | 0,94 | weiß |
| B | 0,660 | 12 | 0,87 | weiß |
| C | 0,689 | 10 | 0,80 | weiß |
| D | 0,584 | 42 | 0,87 | weiß |

\* Handelsprodukt der Degussa AG, Hanau/DE

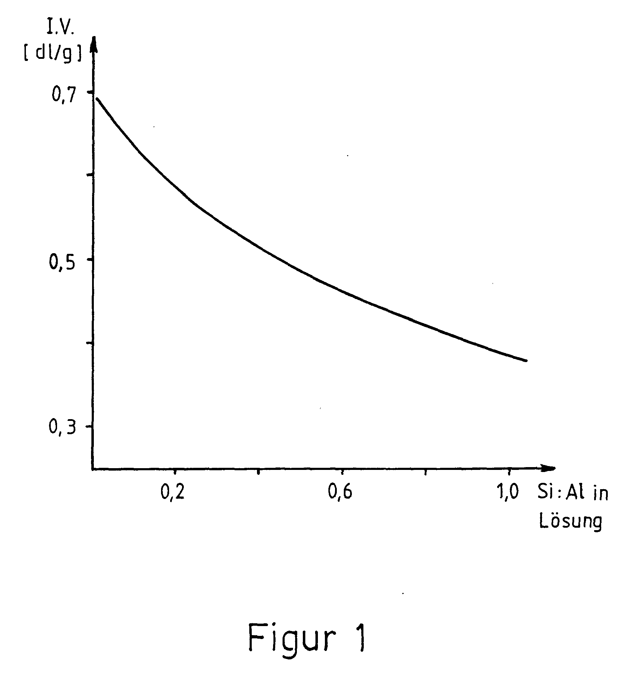

Hierbei zeigte sich auch, daß die beste katalytische Aktivität erzielt wird, wenn bei ansonsten gleichen Bedingungen das atomare Verhältnis der in Lösung gegangenen Elemente Al : Si : Alkali/Erdalkali gleich 1 : ≤ 0,5 : 0,1 bis 30, vorzugsweise gleich 1 : ≤ 0,05 : 10 bis 30 ist. Figur 1 zeigt die bei den geschilderten Versuchen erreichte Intrinsic-Viskosität (I.V.) in Funktion des atomaren Verhältnisses des in Lösung gegangenen Si zu dem gelösten A1.

Das Kochen der Zeolith-Ethylenglykol-Suspension bewirkte als Nebeneffekt auch eine Reduzierung der mittleren Partikelgröße des Zeolith-Katalysators um etwa 20 %, also zum Beispiel von 0,5 μ vor dem Kochen auf 0,4 μ nach dem Kochen.

Die stöchiometrische Zusammensetzung der Zeolithe ist, abgesehen vom Wassergehalt und dem $SiO_2$ : $Al_2O_3$-Verhältnis, von untergeordneter Bedeutung. Alle Zeolithe mit einem molaren Verhältnis $SiO_2$ : $Al_2O_3$ im Bereich von 1,0 bis 4,0, vorzugsweise 1,5 bis 3,0 können, sofern sie die sonstigen Bedingungen erfüllen, eingesetzt werden. Aus Gründen der Verfügbarkeit wird Natrium als Alkalimetall bevorzugt. Andere Alkalioder Erdalkalimetalle sind jedoch in gleicher Weise geeignet. Sofern bei der Polyester-Synthese ein Cobalt-Blautöner zum Einsatz kommt, können die Alkali- oder Erdalkali-Atome des Zeoliths auch bis zu 5 Gew.-% durch zweiwertige Cobalt-Atome ersetzt sein.

Bei der Herstellung von Polyester durch Veresterung mindestens einer Dicarbonsäure oder Umesterung mindestens eines Dicarbonsäuredialkylesters mit mindestens einem Diol sowie nachfolgende Vorkondensation und Polykondensation wird dem Reaktionsgemisch zu einem beliebigen Zeitpunkt vor Beginn der Polykondensation der erfindungsgemäße Zeolith-Polykondensations-Katalysators zugesetzt, vorzugsweise in einer Menge von 10 bis 800 ppm, besonders bevorzugt 50 bis 500 ppm, bezogen auf Trockensubstanz und Polyester.

Die Veresterung erfolgt entweder ohne Katalysator oder in Gegenwart von 5 bis 100 ppm eines üblichen Veresterungskatalysators auf Basis von Antimon, Titan und/oder Germanium. Die Umesterung erfolgt mit herkömmlichen Katalysatoren, insbesondere auf Basis von Mangan, Cobalt und/oder Zink. Diese Veresterungs- und Umesterungskatalysatoren müssen vor Zugabe des Zeolith-Katalysators durch Zusatz einer etwa stöchiometrischen Menge einer Phosphor-Sauerstoff-Verbindung, wie Phosphorsäure, phosphorige Säure, Phosphonsäure, Carboxyphosphonsäure und deren Verbindungen, inaktiviert werden. Eine unvollständige Inaktivierung oder ein Überschuß an Phosphorverbindung vermindert die Aktivität des erfindungsgemäßen Katalysators. Der Zusatz von üblichen Kettenverzweigungsmitteln, Antioxydantien, Mattierungsmitteln und/oder Farbstoffen ist möglich.

Der Zeitpunkt der Zugabe des Polykondensations-Katalysators ist, sofern er vor Beginn der Polykondensation liegt, nicht kritisch. Allerdings ist darauf zu achten, daß zum Zeitpunkt der Zugabe des Zeolith-Katalysators Phosphorverbindungen und Veresterungs- oder Umesterungskatalysatoren entweder im Reaktionsgemisch nicht vorhanden sind oder bereits inaktiviert wurden. So wird bei nichtkatalytischer Veresterung der phosphorhaltige Stabilisator in einer Menge entsprechend 1 bis 50 ppm, vorzugsweise 2 bis 10 ppm Phosphor dem Monomerengemisch zugesetzt und der Zeolith-Katalysator frühestens nach vollendeter Einspeisung des Monomerengemisches, entsprechend einem Veresterungsgrad von 60 bis 98 %, zugegeben. Der Veresterungsgrad (U)kann hierbei aus der Verseifungszahl ($V_z$) und der Säurezahl ($S_z$) des Reaktionsgemisches gemäß U = ($V_z$-$S_z$) . 100/$V_z$ berechnet werden. Die Verseifungszahl wird durch Verseifung mit Kaliumhydroxid in n-Propanol und potentiometrische Titration und die Säurezahl durch potentiometrische Titration in Dimethlyformamid bestimmt.

Die erfindungsgemäß hergestellten Polyethylenterephthalate und deren Copolymere zeichnen sich durch einen besonders niedrigen Diethylenglykol-Gehalt von weniger als 0,8 Gew.-% (ohne zugesetztes Diethylenglykol), einer Carboxyl-Endgruppen-Konzentration von weniger als 20 meq/kg, vorzugsweise weniger als 15 meq/kg und guter Transparenz aus. Polyethylenterephthalat mit 0 bis 10 Gew.-% Isophthalsäure und/oder 1,4-Cyclohexandimethanol, welches durch nicht-katalytische Veresterung und nachfolgende Polykondensation mit dem erfindungsgemäßen Zeolith-Katalysator in Abwesenheit von Mattierungsmitteln und dergleichen hergestellt wurde, hat einen Trübungsgrad von weniger als 2 NTU und ist daher für Klarsichtverpackungen und Getränkeflaschen hervorragend geeignet.

Der erfindungsgemäß hergestellte Polyester ist nahezu farblos, kann aber je nach Verwendungszweck einen Blautöner-Zusatz erfordern. Als solcher eignen sich wenige ppm eines organischen, polyesterlöslichen, blauen oder rötlich-blauen Farbstoffes oder 2 bis 50 ppm Cobalt in Form eines polyesterlöslichen Salzes und/oder als Bestandteil des Zeolith-Polykondensations-Katalysators. Die Zugabe erfolgt bevorzugt zu einem beliebigen Zeitpunkt vor Beginn der Polykondensation.

Unter Polyester sind hierbei Polymere aus Terephthalsäure oder 2,6-Naphthalindicarbonsäure und Ethylenglykol, 1,3-Propandiol, 1,4-Butandiol oder 1,4-Cyclohexandimethanol und deren Copolymere mit anderen Dicarbonsäuren und/oder Diolen, wie beispielsweise Isophthalsäure, Terephthalsäure, 1,4-Cyclohexandicarbonsäure, 2,6-Naphthalindicarbonsäure, p-Hydroxybenzoesäure, 4,4'-Biphenyldicarbonsäure, Adipinsäure, Diethylenglykol, 1,4-Butandiol, 1,4-Cyclohexandimethanol, Polyglykol mit einem Molekulargewicht unter 1000, zu verstehen. Bevorzugter Polyester ist Polyethylenterephthalat mit 0,5 bis 2,0 Masse-% Diethylenglykol (im Prozeß gebildetes und gegebenenfalls zugesetztes), 1,0 bis 5,0 Masse-% eines aus der Isophthalsäure, 2,6-Naphtalindicarbonsäure, p-Hydroxybenzoesäure und 1,4-Cyclohexandimethanol umfassenden Gruppe ausgewählten Comonomers und 0 bis 1000 ppm Pentaerythrit, jeweils bezogen auf Polyester.

Gegebenenfalls kann der Polyester nach der Schmelze-Polykondensation granuliert werden, und das Granulat kristallisiert und in fester Phase nachkondensiert werden. In diesem Fall ist ganz besonders darauf zu achten, daß der Veresterungs- oder Umesterungskatalysator inaktiviert wurde und kein Überschuß einer Phosphor-Sauerstoff-Verbindung vorliegt.

Die Intrinsic-Viskosität (I.V.) wurde bei 25 °C an einer Lösung von 500 mg Polyester in 100 ml eines Gemisches aus Phenol und 1,2-Dichlorbenzol (3 : 2 Gew.-Teile) gemessen.

Das im Polyester enthaltene Diethylenglykol (DEG) wurde gaschromatographisch im bei 200 °C im Bombenrohr erhaltenen Umesterungsgemisch von 1 g Polyester mit 30 ml Methanol und 50 mg/l Zinkacetat ermittelt.

Die COOH-Endgruppenkonzentration wurde durch photometrische Titration mit 0,05 n ethanolischer Kalilauge gegen Bromthymolblau einer Lösung des Polyesters in einem Gemisch aus o-Kresol und Chloroform (70 : 30 Gew. -Teile) bestimmt.

Die Bestimmung des Trübungsgrades in "nephelometrischen Trübungseinheiten" (NTU) erfolgte an einer 10 Gew.-%igen Lösung von Polyester in Phenol/1,2-Dichlorbenzol (3 : 2 Gew.-Teile) mit einem Nephelometer der Firma Hach (Typ XR, nach US-Patent 4 198 161) in einer Küvette mit 22,2 mm Durchmesser in Analogie zu der für Wasser gebräuchlichen Norm DIN 38404, Teil 2. Gemessen wurde die Intensität des Streulichtes im Vergleich zu einer Formazin-Standardlösung und abzüglich des Wertes des reinen Lösungsmittels (etwa 0,3 NTU).

Die Messung des Hunter-Farbwertes b erfolgte an im Trockenschrank bei $135 \pm 5°$ während 1 h kristallisiertem und anschließend gemahlenen (< 400 μm) Polyestergranulat. Die Farbwerte wurden ermittelt, indem in einem Dreibereichsfarbmeßgerät der Farbton der Polyesterprobe mit drei Fotozellen, denen je ein Rot-, Grün- bzw. Blau-Filter vorgeschaltet ist, gemessen wurde (X-, Y- und Z-Werte). Die Auswertung erfolgte nach HUNTER, wobei:

$$b = \frac{7.0}{\sqrt{Y}} \cdot (Y - 0,8467 \cdot Z)$$

Vergleichsbeispiele 1 bis 5 und Beispiele 6 bis 7:

Ausgangsprodukt war ein völlig katalysatorfreies Veresterungsprodukt aus Terephthalsäure und Ethylenglykol (EG) mit folgenden analytischen Daten:

| Intrinsic-Viskosität | 0,20 dl/g |
|---|---|
| Verseifungszahl | 565,2 mg KOH/g |
| Umsatz | 96,1 % |
| Säurezahl | 22 mg KOH/g |
| freies EG | 0,12 Gew.-% |
| DEG | 0,77 Gew.-% |

Je 100 g des Veresterungsproduktes wurden zusammen mit dem Katalysator bei 270 °C innerhalb von 50 min unter Atmosphärendruck aufgeschmolzen. Danach wurde innerhalb von 50 min der Druck allmählich auf 0,1 mbar (abs.) gesenkt und die Temperatur auf 280 °C erhöht. Anschließend wurde bei 280 °C und 0,1 mbar während 120 min polykondensiert. Das in flüssigem Stickstoff erstarrte Polyester-Polykondensat wurde gemahlen und analysiert. Die Ergebnisse sind in Tabelle 2 zusammengestellt. Hierbei bedeuten:

Sb   Antimontriacetat von Elf Atochem als Lösung in Ethylenglykol

U13X   Zeolith 13X von UOP, Wassergehalt 3,5 Gew.-%, mittlere Partikelgröße (d-50) 2,7 μ, Löslichkeit in Veresterungsprodukt ($L_{VE}$) bei 260 °C 4 Gew.-%, als gemahlenes Pulver eingesetzt.

WNaP   Wessalith Na-P von Degussa, Wassergehalt 10 Gew.-%, d-50 3,5 μ, $L_{VE}$ bei 260 °C 6 Gew.-%, als gemahlenes Pulver eingesetzt.

WXD   Wessalith XD von Degussa, Wassergehalt 22,5 Gew.-%, d-50 3,5 μ, $L_{VE}$ bei 260 °C 6 Gew.-%, als gemahlenes Pulver eingesetzt.

WP-3,5   Wessalith P von Degussa, Wassergehalt 21 Gew.-%, d-50 3,5 μ, $L_{VE}$ bei 260 °C 8 Gew.-%, als gemahlenes Pulver eingesetzt.

WP-0,65   Wessalith P von Degussa, Wassergehalt 21 Gew.-%, d-50 0,65 μ, $L_{VE}$ bei 260 °C 10 Gew.-%, als 45%ige Suspension in Ethylenglykol eingesetzt.

WP-0,35   Wessalith P von Degussa, Wassergehalt 21 Gew.-%, d-50 0,35 μ, $L_{VE}$ bei 260 °C 12 Gew.-%, als 45%ige Suspension in Ethylenglykol eingesetzt.

Tabelle 2:

| Beisp. Nr. | Katalysator | | Polyester | | | | |
|---|---|---|---|---|---|---|---|
| | Art | Konz. * [ppm] | I.V. [dl/g] | COOH [meq/kg] | DEG [Gew.-%] | Farbe | |
| 1 | Sb | 250 | 0,69 | 15 | 1,0 | weiß | |
| 2 | U13X | 1000 | 0,39 | 15 | 0,97 | gelb | |
| 3 | WNaP | 1000 | 0,48 | 8 | 1,0 | weiß | |
| 4 | WXD | 1000 | 0,50 | 10 | 0,90 | weiß | |
| 5 | WP-3,5 | 1000 | 0,70 | 20 | 0,97 | weiß | |
| 6 | WP-0,65 | 250 | 0,60 | 10 | 0,94 | weiß | |
| 7 | WP-0,35 | 250 | 0,65 | 12 | 0,98 | weiß | |

* bezogen auf Polyester; bei Antimontriacetat als Sb, bei den Zeolithen als Trockensubstanz

Vergleichsbeispiele 8 bis 10 und Beispiele 11 bis 13:

Je 4000 g des in den Beispielen 1 bis 9 verwendeten Veresterungsproduktes wurden zusammen mit dem Katalysator und gegebenenfalls weiteren Zusätzen innerhalb von 70 min bei 250 °C und Atmosphärendurck aufgeschmolzen und danach unter Rühren bis zum Erreichen einer Masse-Temperatur von 270 °C unter Atmosphärendruck ca. 60 min erhitzt. Nach einer allmählichen Reduktion des Druckes innerhalb von 50 min auf 0,5 mbar (abs.) wurde die Temperatur auf 280 °C erhöht und bei 0,5 mbar bis zum Erreichen der gewünschten Intrinsic-Viskosität polykondensiert. Die Polyesterschmelze wurde in einen Strang gepreßt und granuliert. Die Ergebnisse sind in Tabelle 3 zusammengestellt.

Tabelle 3

| Beisp. Nr. | Zusätze ∗ | | Polyester | | | | |
|---|---|---|---|---|---|---|---|
| | Art | Konz. [ppm] | ΔI.V./h [dl/g·h] | I.V. [dl/g] | COOH [meq/kg] | DEG [Gew.-%] | Farbe [b-Wert] |
| 8 | Sb | 195 | 0,23 | 0,653 | 13 | 0,92 | +2,5 |
| 9 | WP-3,5 | 750 | 0,24 | 0,721 | 25 | 0,86 | +5,0 |
| 10 | WP-3,5 | 400 | 0,15 | 0,739 | 33 | 0,94 | +6,0 |
| 11 | WP-0,35 + Irganox | 400 200 | 0,20 | 0,700 | 15 | 0,88 | +0,5 |
| 12 | WP-0,35 + CEPS | 400 20 | 0,18 | 0,623 | 12 | 0,90 | +2,8 |
| 13 | WP-0,65 + CEPS + CoAc | 400 20 15 | 0,16 | 0,646 | 18 | 0,92 | -2,3 |

∗ Irganox = Irganox 1010
CEPS = Carboxyethylenphosphonsäure von Hoechst, Konzentration in ppm Phosphor
CoAc = Cobaltdiacetat, Konzentration in ppm Cobalt
(ansonsten wie zuvor)

Beispiele 14 bis 17:

In einen mit etwa 30 % des Veresterungsproduktes der vorangehenden Charge gefüllten Veresterungsreaktor wurden bei 260 °C und Atmosphärendruck kontinuierlich 250 kg einer homogenen Paste aus Terephthalsäure und Ethylenglykol im Molverhältnis 1 : 1,1 sowie der Phosphorverbindung innerhalb von 80 min eingespeist. Danach wurde in den Beispielen 15 bis 17 der Zeolith-Katalysator zugesetzt, während dieser im Beispiel 14 erst später, gleichzeitig zur Cobaltverbindung zugegeben wurde. Anschließend wurde unter Erhöhung der Temperatur auf 270 °C 30 min lang

EP 0 831 109 B1

weiterverestert. Während der gesamten Veresterung wurde das gebildete Reaktionswasser über eine Kolonne abgetrennt. Danach wurde die Cobaltverbindung zugegeben und der Reaktionsdruck innerhalb von 20 min auf 10 mbar (abs.) reduziert. Anschließend wurde das Reaktionsgemisch in einen Ringscheibenreaktor nach USP 3 617 225 überführt und bei 270 bis 275 °C und 0,5 mbar polykondensiert. Nach Erreichen der gewünschten Intrinsic-Viskosität wurde das Vakuum auf etwa 10 mbar eingestellt und die Polyesterschmelze mittels einer Zahnradpumpe einem Unterwassergranulator zugeführt und granuliert. Die Ergebnisse sind in Tabelle 4 zusammengestellt.

Tabelle 4:

| Beisp. Nr. | Zusätze * | | Polykond.-dauer | Polyester | | | | | |
|---|---|---|---|---|---|---|---|---|---|
| | Art | Konz. [ppm] | [min] | I.V. [dl/g] | [meq/kg] | DEG [Gew.-%] | Trübg. [NTU] | Farbe [b-Wert] | |
| 14 | WP-0,35 + CoAC + CEPS | 400 10 20 | 170 | 0,62 | 11 | 0,60 | 0,7 | -3,8 | |
| 15 | WP-0,35 + CoAC + PEE | 400 14 14 | 214 | 0,62 | 7 | 0,70 | 1,8 | -3,2 | |
| 16 | WP-0,35 + CoAC + H$_3$PO$_4$ | 400 5 10 | 264 | 0,62 | 10 | 0,79 | 1,3 | + 3,2 | |
| 17 | WP-0,35 + CoAc + TTPG | 400 5 10 | 264 | 0,63 | 9 | 0,77 | 1,2 | +0,6 | |

* PEE = Diethylcarboxymethylphosphonat von Hoechst
TTPG = Tris(triethylenglykol)phosphat Konzentration sämtlicher Phosphorverbindungen in ppm Phosphor
(ansonsten wie zuvor)

**Patentansprüche**

1. Verfahren zur Herstellung von Polyester durch Veresterung mindestens einer Dicarbonsäure oder Umesterung mindestens eines Dicarbonsäuredialkylesters mit mindestens einem Diol sowie nachfolgende Vorkondensation und Polykondensation in Gegenwart eines Polykondensations-Katalysators, **dadurch gekennzeichnet, daß** der Polykondensations-Katalysator ein Alkali- oder Erdalkalimetall-aluminiumsilikat-Zeolith mit einer Löslichkeit bei 260 °C in im wesentlichen aus Bis(hydroxyethylen)terephthalat bestehendem Veresterungsgemisch, welches durch Veresterung von Terephthalsäure mit Ethylenglykol bis zu einem Umsetzungsgrad von über 85 % erhalten wurde, von über 8,0 Gew.-%, einem originären Wassergehalt von 12 bis 30 Gew.-%, jeweils bezogen auf Trokkensubstanz, und einer mittleren Partikelgröße von weniger als 1,0 µm ist, und in einer Menge von 10 bis 800 ppm, bezogen auf Trockensubstanz sowie auf Polyester, zu einem beliebigen Zeitpunkt vor Beginn der Polykondensation zugesetzt wird.

2. Verfahren gemäß Anspruch 1, **dadurch gekennzeichnet, daß** der Zeolith-Polykondensations-Katalysator ein molares Verhältnis SiO$_2$ : Al$_2$O$_3$ im Bereich von 1,0 bis 4,0 aufweist.

3. Verfahren gemäß einem der Ansprüche 1 bis 2, **dadurch gekennzeichnet, daß** die Veresterung oder Umesterung in Gegenwart üblicher Katalysatoren erfolgt, und diese Katalysatoren vor Zugabe des Zeolith-Polykondensations-Katalysators durch Zusatz einer etwa stöchiometrischen Menge einer Phosphor-Sauerstoff-Verbindung inaktiviert werden.

4. Verfahren gemäß einem der Ansprüche 1 bis 3, **dadurch gekennzeichnet, daß** der Polyester ein Polyethylenterephthalat mit 0 bis 10 Gew.-% Isophthalsäure und/oder 1,4-Cyclohexandimethanol-Anteil und einem Trübungsgrad von weniger als 2,0 NTU ist, und durch nicht-katalytische Veresterung in Gegenwart von 1 bis 50 ppm Phosphor in Form einer Phosphor-Verbindung und nachfolgende Vorkondensation und Polykondensation in Gegenwart von 10 bis 800 ppm, bezogen auf Trockensubstanz, des Zeolith-Polykondensations-Katalysators, erhalten wird.

7

5.  Verfahren gemäß einem der Ansprüche 1 bis 4, **dadurch gekennzeichnet, daß** dem Veresterungsgemisch 2 bis 50 ppm Cobalt in Form eines polyesterlöslichen Salzes und/oder als Bestandteil des Zeolith-Polykondensations-Katalysators zugesetzt werden.

**Claims**

1.  A method for the manufacture of polyester by esterification of at least one dicarboxylic acid or transesterification of at least one dicarboxylic acid dialkyl ester with at least one diol and also subsequent preliminary condensation and polycondensation in the presence of a polycondensation catalyst,
    **characterised in that** the polycondensation catalyst is an alkali or earth alkali metal - aluminium silicate zeolite with a solubility of above 8.0 % by weight at 260°C in an esterification mixture substantially consisting of bis(hydroxyethylene) terephthalate, which was obtained by esterification of terephthalic acid with ethylene glycol up to a transformation rate of above 85 %, an orignal water content of 12 to 30 % by weight, in each case in relation to the dry substance, and an average particle size of less than 1.0 μm, and is added at any moment before the start of polycondensation in a quantity of 10 to 800 ppm, in relation to dry substance and also to polyester.

2.  A method according to Claim 1,
    **characterised in that** the zeolite polycondensation catalyst comprises a molar ratio $SiO_2 : Al_2O_3$ in the range from 1.0 to 4.0.

3.  A method according to one of Claims 1 to 2,
    **characterised in that** the esterification or transesterification takes place in the presence of normal catalysts, and these catalysts are inactivated before the addition of the zeolite polycondensation catalyst by the admixture of a stoichiometric quantity of a phosphorous-oxygen compound.

4.  A method according to one of Claims 1 to 3,
    **characterised in that** the polyester is a polyethylene terephthalate with 0 to 10 % by weight isophthalic acid and/ or 1.4-cyclohexandimethanol content and a degree of turbidity of less than 2.0 NTU, and is obtained by non-catalytic esterification in the presence of 1 to 50 ppm phosphorous in the form of a phosphorous compound and subsequent preliminary condensation and polycondensation in the presence of 10 to 800 ppm of the zeolite polycondensation catalyst, in relation to dry substance.

5.  A method according to one of Claims 1 to 4,
    **characterised in that** 2 to 50 ppm cobalt is added to the esterification mixture in the form of a polyester-soluble salt and/or as a constituent of the zeolite polycondensation catalyst.

**Revendications**

1.  Procédé de fabrication d'un polyester par estérification d'au moins un acide dicarboxylique ou par transestérification d'au moins un dialkylester d'acide dicarboxylique avec au moins un diol, de même que par précondensation et polycondensation dans des étapes suivantes en présence d'un catalyseur de polycondensation **caractérisé en ce que** le catalyseur de polycondensation est une zéolithe de silicate d'aluminium et d'un métal alcalin ou alcalino-terreux ayant une solubilité à 260°C dans un mélange d'estérification essentiellement constitué de bis-(hydroxyéthylène)téréphtalate que l'on a obtenu par estérification de l'acide téréphtalique avec de l'éthylène glycol jusqu'à un degré de conversion supérieur à 85 %, de plus de 8 % p/p, une teneur d'origine en eau de 12 à 30 % p/p, dans chaque cas, sur la base de la substance sèche, et une taille de particule moyenne de moins de 1,0 μm, que l'on ajoute en une quantité de 10 à 800 ppm sur la base de la substance sèche, de même que sur la base du polyester, à un moment choisi arbitrairement avant le début de la polycondensation.

2.  Procédé selon la revendication 1, **caractérisé en ce que** le catalyseur de polycondensation à zéolithe a un rapport molaire $SiO_2:Al_2O_3$ compris dans un intervalle allant de 1,0 à 4,0.

3.  Procédé selon l'une des revendications 1 et 2, **caractérisé en ce que** l'on effectue l'estérification ou la transestérification en présence de catalyseurs habituels et **en ce que** l'on inactive ces catalyseurs avant l'introduction du catalyseur de polycondensation à zéolithe par addition d'une quantité sensiblement stoechiométrique d'un composé du phosphore et de l'oxygène.

EP 0 831 109 B1

**4.** Procédé selon l'une quelconque des revendications 1 à 3, **caractérisé en ce que** le polyester est un polyéthylène téréphtalate comprenant 0 à 10 % en poids d'acide isophtalique et/ou de parties de 1,4-cyclohexanediméthanol, et avec un degré de turbidité de moins de 2,0 NTU et **en ce que** l'on obtient celui-ci par estérification non catalytique en présence de 1 à 50 ppm de phosphore sous la forme d'un composé du phosphore puis précondensation et polycondensation en présence de 10 à 800 ppm, sur la base de la substance sèche, du catalyseur de polycondensation à zéolithe.

**5.** Procédé selon l'une quelconque des revendications 1 à 4, **caractérisé en ce que** l'on ajoute au mélange d'estérification 2 à 50 ppm de cobalt sous la forme d'un sel soluble dans le polyester et/ou d'un composant du catalyseur de polycondensation à zéolithe.

Figur 1